# EUROPEAN PATENT APPLICATION

(11) **EP 4 653 948 A1**
(43) Date of publication of application: **26.11.2025**
(21) Application number: 24760149.5
(22) Date of filing: 08.02.2024
(51) Int. Cl.: G03B 21/14, G02F 1/133, G02F 1/1333, G03B 21/00, G03B 21/16, H04N 5/74

(54) **PROJECTION DISPLAY DEVICE**

(30) Priority: 24.02.2023 JP 2023026865
(71) Applicant: JVCKenwood Corporation, Yokohama-shi, Kanagawa 2210022 (JP)
(72) Inventor: ASAKA, Naruki, Yokohama-shi, Kanagawa 221-0022 (JP)
(74) Representative: Carstens, Dirk Wilhelm
(86) International application number: PCT/JP2024/004248
(87) International publication number: WO 2024/176847

(57) **Abstract**

A projection display device (100) includes a third display element (106B) embedded with a band-gap type temperature sensor (163), a heater (161), a temperature sensor (162), a fan, and a control unit (12) that controls operations of the third display element (106B), the heater (161), and the fan based on temperatures detected by the temperature sensors (162, 163). In a case where the projection display device (100) is in a standby state, the control unit (12) operates the heater (161) to control the third display element (106B) to have a target temperature based on the temperature detected by the temperature sensor (162) without supplying power to the third display element (106B). When the projection display device (100) is activated, the control unit supplies power to the third display element (106B) and operates at least one of the heater (161) and the fan to control the third display element (106B) to have the target temperature based on the temperature detected by the temperature sensor (163).

## Description

### Field

The present disclosure relates to a projection display device using a liquid crystal display element. Background

Projection display devices using reflective liquid crystal display elements are generally known (see, for example, Patent Literature 1). In this type of projection display device, it is important to keep the temperature of the liquid crystal display element substantially constant at a temperature higher than an operating temperature in order to maintain good display image performance.

### Citation List

### Patent Literature

Patent Literature 1: JP 2005-227485 A

### Summary

Meanwhile, this projection display device is required to exhibit image performance immediately after startup. Therefore, a configuration with a heater for heating the liquid crystal display element is assumed. However, even in the configuration with a heater, the heater operates after the projection display device starts up. It thus takes time for the liquid crystal display element to heat up to a desired temperature, and there is room for improvement in that the image performance immediately after startup is not stable.

In view of the above issues, an object of the present disclosure is to provide a projection display device capable of achieving stable image performance immediately after startup.

A projection display device according to the present disclosure comprising: a liquid crystal display element embedded with a first temperature sensor; a heating unit disposed on the liquid crystal display element via a heat sink; a second temperature sensor disposed on the heat sink; a blower fan that air-cools the heat sink; and a control unit that controls operations of the liquid crystal display element, the heating unit, and the blower fan based on temperatures detected by the first temperature sensor and the second temperature sensor, wherein in a case where the projection display device is in a standby state, the control unit operates the heating unit to control the liquid crystal display element to have a target temperature based on the temperature detected by the second temperature sensor without supplying power to the liquid crystal display element, and when the projection display device is activated, the control unit supplies power to the liquid crystal display element and operates at least one of the heating unit and the blower fan to control the liquid crystal display element to have the target temperature based on the temperature detected by the first temperature sensor.

According to the present embodiment, in a case where the projection display device is in a standby state before startup, the heating unit is operated to control the liquid crystal display element to the target temperature based on the temperature detected by the second temperature sensor, so that stable image performance can be achieved immediately after startup.

### Brief Description of Drawings

FIG. 1 is a schematic diagram of a display device according to the present embodiment.
FIG. 2 is a schematic block diagram of a control unit according to the present embodiment.
FIG. 3 is a time chart illustrating an example of an operation of a temperature sensor and a band-gap type temperature sensor according to the present embodiment.
FIG. 4 is a flowchart illustrating steps of an operation of a control unit according to the present embodiment.

### Description of Embodiments

Hereinafter, the present embodiment will be described in detail with reference to the drawings. Note that the present disclosure is not limited to the embodiment described below.

### (Configuration of Projection Display Device)

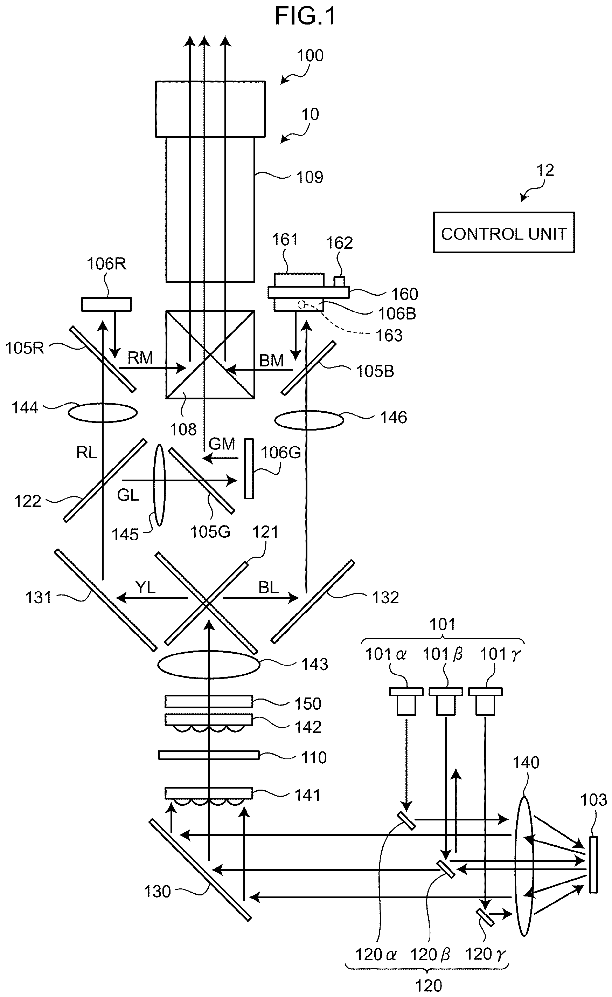

FIG. 1 is a schematic diagram of a projection display device according to the present embodiment. The projection display device is a display device that generates white light by irradiating a phosphor with visible light (for example, blue laser light), decomposes the white light into red light, blue light, and green light, and then modulates the light of each color and combines the resultants to display an image. As illustrated in FIG. 1, the projection display device 100 according to the present embodiment includes a display mechanism 10 and a control unit 12. The display mechanism 10 includes a light source 101, a phosphor 103, polarizing plates 105R, 105G, and 105B, a first display element 106R, a second display element 106G, a third display element 106B, a color synthesis prism 108, a projection lens 109, a λ/4 plate 110, dichroic mirrors 120 to 122, reflective mirrors 130 to 132, lenses 140 to 146, and a polarization conversion element 150. The first display element 106R, the second display element 106G, and the third display element 106B are each a reflective liquid crystal display element that has a configuration in which a liquid crystal layer is sandwiched between a silicon substrate and a glass substrate, and is provided corresponding to each color described later.

The dichroic mirrors 120 to 122 each have a characteristic of separating incident light by reflection and transmission with a separation wavelength as a separation boundary. The dichroic mirrors 120 to 122 each can be fabricated by, for example, forming a dielectric multilayer film in a predetermined region of a transparent material such as a glass plate or a prism. The optical characteristics can be set according to the material and film thickness of the dielectric constituting the dielectric multilayer film.

The light source 101 emits illumination light that is light in a wavelength band of visible light. In the present embodiment, the light source 101 is a blue laser light source including a blue laser element, and emits blue illumination light in a wavelength band of 450 (nm) or more and 495 (nm) or less, for example.

In the present embodiment, the light source 101 includes three (a plurality of) groups with different oscillation wavelengths: a first blue laser light source 101α, a second blue laser light source 101β, and a third blue laser light source 101γ. The groups of the first blue laser light source 101α to the third blue laser light source 101γ are set to have oscillation wavelengths that differ by at least 10 (nm) or more. Specifically, the oscillation wavelength of the first blue laser light source 101α is set to 445 (nm), the oscillation wavelength of the second blue laser light source 101β is set to 455 (nm), and the oscillation wavelength of the third blue laser light source 101γ is set to 465 (nm).

The oscillation wavelengths of the first blue laser light source 101α to the third blue laser light source 101γ described above are merely examples, and can be appropriately changed as long as they are included in the blue wavelength band. In addition, the difference value between the oscillation wavelengths of each of the blue laser light sources can be appropriately changed within a range of, for example, 10 (nm) or more and 20 (nm) or less. Further, the number of blue laser light sources can be appropriately changed, and may be one (single wavelength).

The dichroic mirror 120 is irradiated with the blue illumination light from the light source 101. The dichroic mirror 120 has a property of reflecting blue illumination light and transmitting yellow illumination light. In the present embodiment, the dichroic mirror 120 includes dichroic mirrors 120α, 120β, 120γ placed corresponding to the first blue laser light source 101α to the third blue laser light source 101γ, respectively.

The blue illumination light emitted from the first blue laser light source 101α to the third blue laser light source 101γ is reflected on the dichroic mirrors 120α to 120γ respectively, further condensed by the lens 140, and applied to the phosphor 103. The phosphor 103 has a fluorescent layer and a reflective surface. The fluorescent layer generates yellow illumination light containing a red band component and a green band component with intensity corresponding to energy intensity of the blue illumination light emitted from the first blue laser light source 101α to the third blue laser light source 101γ. The reflective surface reflects the blue illumination light that has passed through the fluorescent layer and the yellow illumination light generated by the fluorescent layer.

The dichroic mirrors 120α, 120β, 120γ are formed so as to have an area smaller than the beam width of reflected light (diffused light) from the phosphor 103. The dichroic mirrors 120α to 120γ are oriented so that the polarization direction of the laser light with respect to the dichroic mirrors 120α, 120β, and 120γ is s-polarized. For this reason, the dichroic mirrors 120α to 120γ have characteristics of reflecting s-polarized light and transmitting p-polarized light of the blue illumination light incident on the dichroic mirrors 120α to 120γ, and transmitting the yellow illumination light regardless of the polarization direction.

Accordingly, the yellow illumination light (fluorescent light) containing the red component and the green component due to wavelength excitation by the phosphor 103 and the blue illumination light that does not fluoresce are mixed, and the resultant enters the dichroic mirrors 120α to 120γ again. The yellow illumination light containing the red component and the green component, which is fluorescent light, passes through the dichroic mirrors 120α to 120γ and is all emitted. On the other hand, when being reflected (diffused) by the phosphor 103, the blue illumination light becomes randomly polarized light in which multiple polarized light is mixed. Therefore, among the components of the blue illumination light that hit the dichroic mirrors 120α to 120γ, the p-polarized light component passes through the dichroic mirrors 120α to 120γ and is emitted, but the s-polarized light component is reflected on the dichroic mirrors 120α to 120γ and returns to the first blue laser light source 101α to the third blue laser light source 101γ.

The blue illumination light and the yellow illumination light that have passed through the dichroic mirrors 120α to 120γ are reflected on the reflective mirror 130 to enter the lens 141. The lens 141 and the lens 142 are, for example, fly-eye lenses, and the λ/4 plate 110 is disposed between the lenses 141 and 142. The blue illumination light and the yellow illumination light that have been reflected on the reflective mirror 130 are made uniform in illumination distribution by the lens 141, the λ/4 plate 110, and the lens 142, and the resultants enter the polarization conversion element 150. The polarization conversion element 150 includes, for example, a polarization beam splitter and a retardation plate. The polarization beam splitter reflects any one of the s-polarized light and the p-polarized light and transmits the other. In the example of FIG. 1, the polarization beam splitter reflects the s-polarized light and transmits the p-polarized light. The retardation plate converts any one of the s-polarized light and the p-polarized light into the other. In the example of FIG. 1, the retardation plate converts the s-polarized light into the p-polarized light. The polarization conversion element 150 aligns each illumination light with the p-polarized light.

The illumination light that has been aligned with the p-polarized light by the polarization conversion element 150 is applied to the dichroic mirror 121 via the lens 143. The lens 143 is, for example, a condenser lens.

The dichroic mirror 121 separates the incident blue illumination light BL and yellow illumination light YL from each other. The yellow illumination light YL that has been separated by the dichroic mirror 121 is reflected by the reflective mirror 131 to enter the dichroic mirror 122.

The dichroic mirror 122 uses an intermediate wavelength between a red light band and a green light band as the separation boundary, and separates the incident yellow illumination light YL into red illumination light RL containing the red band component and green illumination light GL containing the green band component. Specifically, the dichroic mirror 122 reflects the green band component of the incident yellow illumination light YL to emit the green illumination light GL, and transmits the red band component of the incident yellow illumination light YL to emit the red illumination light RL. Incidentally, the red illumination light RL is, for example, light in a wavelength band of 620 (nm) or more and 750 (nm) or less, and the green illumination light GL is, for example, light in a wavelength band of 495 (nm) or more and 570 (nm) or less.

The red illumination light RL that has been separated by the dichroic mirror 122 is applied to the polarizing plate 105R via the lens 144. The green illumination light GL that has been separated by the dichroic mirror 122 is applied to the polarizing plate 105G via the lens 145. The blue illumination light BL that has been separated by the dichroic mirror 121 is reflected by the reflective mirror 132, and is applied to the polarizing plate 105B via the lens 146.

The polarizing plates 105R, 105G, and 105B each have a characteristic of reflecting any one of the s-polarized light and the p-polarized light and transmitting the other. The example of FIG. 1 illustrates a state in which the polarizing plates 105R, 105G, and 105B reflect the s-polarized light and transmit the p-polarized light. The polarizing plates 105R, 105G, and 105B are also referred to as reflective polarizing plates. The polarizing plates 105R, 105G, and 105B are, for example, wire grid polarizing plates.

The red illumination light RL, which is p-polarized light, passes through the polarizing plate 105R to be applied to the first display element 106R. The green illumination light GL, which is p-polarized light, passes through the polarizing plate 105G to be applied to the second display element 106G. The blue illumination light BL, which is p-polarized light, passes through the polarizing plate 105B to be applied to the third display element 106B.

The first display element 106R optically modulates the p-polarized red illumination light RL based on image data of the red component, and generates s-polarized red image light RM. The second display element 106G optically modulates the p-polarized green illumination light GL based on image data of the green component, and generates s-polarized green image light GM. The third display element 106B optically modulates the p-polarized blue illumination light BL based on image data of the blue component, and generates s-polarized blue image light BM. That is, the first display element 106R functions as an optical modulation element for red image, the second display element 106G functions as an optical modulation element for green image, and the third display element 106B functions as an optical modulation element for blue image.

The red image light RM, which is s-polarized light, generated by the first display element 106R is reflected by the polarizing plate 105R to be applied to the color synthesis prism 108. The green image light GM, which is s-polarized light, generated by the second display element 106G is reflected by the polarizing plate 105G to be applied to the color synthesis prism 108. The blue image light BM, which is s-polarized light, generated by the third display element 106B is reflected by the polarizing plate 105B to be applied to the color synthesis prism 108.

The color synthesis prism 108 reflects the red image light RM and the blue image light BM, transmits the green image light GM, and irradiates the projection lens 109 with each image light.

The red image light RM, the green image light GM, and the blue image light BM are projected onto a screen (not illustrated) or the like via the projection lens 109. A visible light image is displayed with the red image light RM, the green image light GM, and the blue image light BM.

In the meantime, a projection display device using this type of reflective liquid crystal display element is required to exhibit stable image performance immediately after activation, but fringes (interference fringes) that divide the displayed image into a bright region and a dark region may occur immediately after activation. The liquid crystal display element immediately after activation generally has a temperature lower than a temperature suitable for operation. For this reason, before the liquid crystal display element warms up to an appropriate temperature, the temperature distribution in the liquid crystal display element becomes uneven, and for example, defects such as fringes are likely to occur. In particular, in a configuration using a blue laser light source as the light source, fringes tend to occur easily in blue image light.

In order to solve the defects described above, in the present embodiment, as illustrated in FIG. 1, the display mechanism 10 includes a heater (heating unit) 161 disposed, via a heat sink 160, on the back surface (surface opposite to the side irradiated with the blue illumination light BL) of the third display element 106B corresponding to blue color, and a temperature sensor (second temperature sensor) 162 provided on the heat sink 160. The heat sink 160 is formed of a metal having high thermal conductivity such as aluminum, and is a plate-like member having a constant thickness. The heat sink 160 is formed to be larger than the back surface of the third display element 106B, and the entire back surface is in contact with the heat sink 160.

The heater 161 serves to warm the third display element 106B via the heat sink 160, and for example, can be a plate-shaped ceramic heater. The heater 161 is disposed on the heat sink 160, which enables the entire heat sink 160 to be warmed, and eventually, the third display element 106B can be uniformly warmed. The temperature sensor 162 is attached to the heat sink 160, and can indirectly detect the temperature of the third display element 106B by measuring the temperature of the heat sink 160.

In addition, the third display element 106B includes a band-gap type temperature sensor (first temperature sensor) 163 in the element circuit. The band-gap type temperature sensor 163 is, for example, a semiconductor temperature sensor that measures temperature based on a voltage value across a diode in an electric circuit including the diode. Since the band-gap type temperature sensor 163 is provided in the element circuit of the third display element 106B, the temperature of the third display element 106B can be directly and accurately measured. On the other hand, the band-gap type temperature sensor 163 cannot measure the temperature when the third display element 106B is not operating, that is, when power (electricity) is not supplied to the third display element 106B. In light of the above, in the present embodiment, when the projection display device 100 is not activated and no power is supplied to the third display element 106B, for example, when the projection display device 100 is in a standby state, data detected by the temperature sensor 162 is used.

Here, the standby state means that the projection display device 100 is in a waiting state, and means a state in which power is supplied to the projection display device 100 but no image light is applied. That is, in the standby state, no power is supplied to the light source 101 and the display element (first display element 106R, second display element 106G, and third display element 106B) of each color. On the other hand, activation means that the projection display device 100 starts operating and image light is applied, that is, starts a normal operation state. When the projection display device 100 is activated, power is supplied to the light source 101 and the display element (first display element 106R, second display element 106G, and third display element 106B) of each color. The power supply is generally a commercial power supply, but is not limited thereto and can be a battery power supply.

In addition to the third display element 106B corresponding to blue color, each of the back surfaces of the first display element 106R corresponding to red color and the second display element 106G corresponding to green color may be provided with the heat sink 160, the heater 161, the temperature sensor (second temperature sensor) 162, and the band-gap type temperature sensor (first temperature sensor) 163.

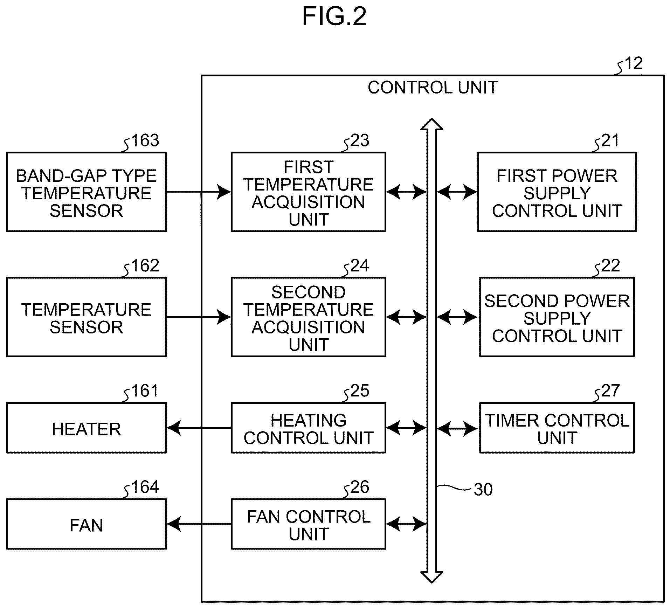

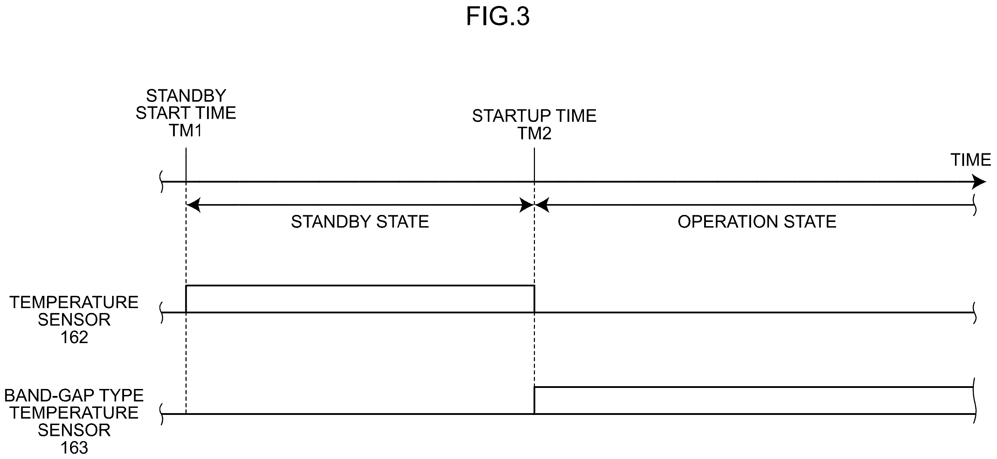

Next, the control unit 12 will be described. FIG. 2 is a schematic block diagram of a control unit according to the present embodiment. FIG. 3 is, FIG. 3 is a time chart illustrating an example of an operation of a temperature sensor and a band-gap type temperature sensor according to the present embodiment. As illustrated in FIG. 2, the control unit 12 includes a first power supply control unit 21, a second power supply control unit 22, a first temperature acquisition unit 23, a second temperature acquisition unit 24, a heating control unit 25, a fan control unit 26, and a timer control unit 27, which are each connected to a bus 30.

The control unit 12 may be configured with an integrated circuit which is hardware, or may be configured with a central processing unit (CPU) which is an arithmetic device of a computer and a memory, and may be configured to cause the CPU to execute a computer program (software) stored in the memory. In the present embodiment, a part related to operation control on the heater 161 will be mainly described, and description of other parts will be omitted.

The first power supply control unit 21 controls power supply for a case where the projection display device 100 is in the standby state. Specifically, when the projection display device 100 enters the standby state, the first power supply control unit 21 supplies power to at least the heater 161 and the temperature sensor 162, which makes the heater 161 and the temperature sensor 162 operable. In such a case, the first power supply control unit 21 does not supply power to the light source 101 and the display element (first display element 106R, second display element 106G, and third display element 106B) of each color. In this configuration, power used at the time of standby can be reduced.

The second power supply control unit 22 controls power supply for a case where the projection display device 100 performs normal operation after activation. Specifically, when the projection display device 100 is activated, the second power supply control unit 22 supplies power to the light source 101 and the display element (first display element 106R, second display element 106G, and third display element 106B) of each color. As a result, power is supplied also to the band-gap type temperature sensor 163 provided in the third display element 106B. In the present embodiment, the second power supply control unit 22 supplies power to all the electrical components other than the temperature sensor 162.

The first temperature acquisition unit 23 acquires temperature data detected by the band-gap type temperature sensor (first temperature sensor) 163. The band-gap type temperature sensor 163 detects the temperature of the third display element 106B when power is supplied to the third display element 106B under the control of the second power supply control unit 22. The first temperature acquisition unit 23 outputs the acquired temperature data to the heating control unit 25 and the fan control unit 26. In a case where there is no input of temperature data from the band-gap type temperature sensor 163, the first temperature acquisition unit 23 may determine that no power is supplied to the third display element 106B and output the determination result to the heating control unit 25 and the fan control unit 26.

The second temperature acquisition unit 24 acquires temperature data detected by the temperature sensor (second temperature sensor) 162. In the present embodiment, unlike the band-gap type temperature sensor 163, the temperature sensor 162 detects the temperature of the third display element 106B at least when the projection display device 100 is in the standby state under the control of the second power supply control unit 22. The second temperature acquisition unit 24 outputs the acquired temperature data to the heating control unit 25.

The heating control unit 25 controls the operation of the heater 161 based on the temperature data (detected temperature) input from the first temperature acquisition unit 23 or the second temperature acquisition unit 24. In the present embodiment, in a case where the projection display device 100 is in the standby state, the heating control unit 25 controls the operation of the heater 161 based on the temperature data input from the second temperature acquisition unit 24. That is, in a case where no power is supplied to the third display element 106B, the heating control unit 25 uses the data detected by the temperature sensor 162 to control the operation of the heater 161 so that the third display element 106B has a predetermined target temperature. The target temperature is, for example, a temperature falling within a temperature range in which the third display element 106B appropriately operates.

In addition, in a case where the projection display device 100 is activated and is in a normal operation state, the heating control unit 25 controls the operation of the heater 161 based on the temperature data input from the first temperature acquisition unit 23. That is, after power is supplied to the third display element 106B, the heating control unit 25 uses the data detected by the band-gap type temperature sensor 163 instead of the temperature sensor 162 to control the operation of the heater 161 so that the third display element 106B has a predetermined target temperature. According to the configuration, temperature data obtained by directly and accurately measuring the temperature of the third display element 106B can be used, and the third display element 106B can be accurately controlled to reach the target temperature.

As described above, since the temperature sensor 162 is provided on the heat sink 160, an error occurs in the detected temperature as compared with the band-gap type temperature sensor 163. Accordingly, it is desirable to accurately control the third display element 106B to reach the target temperature by minimizing the error even when the projection display device 100 is in the standby state. In the present embodiment, for example, in a case where the projection display device 100 is activated, the heating control unit 25 calculates and stores a difference value (temperature difference) between the temperature sensor 162 and the band-gap type temperature sensor 163 based on each set of temperature data input from the first temperature acquisition unit 23 and the second temperature acquisition unit 24. Then, in a case where the projection display device 100 is in the standby state at least the next time and onwards, the heating control unit 25 controls the operation of the heater 161 based on corrected temperature data obtained by correcting the temperature data input from the second temperature acquisition unit 24 with the difference value stored. The difference value may be calculated once, stored, and used continuously, or may be newly calculated every time, stored, and used next time. According to this configuration, the third display element 106B can be accurately controlled to the target temperature in the second and subsequent standby states.

The fan control unit 26 controls the operation of a fan 164 based on the temperature data input from the second temperature acquisition unit 24. The fan 164 is, for example, an exhaust fan that is provided in a housing (not illustrated) accommodating the display mechanism 10 therein and is configured to cool the display mechanism 10 (particularly, the third display element 106B) by exhausting air in the housing and drawing in outside air into the housing. In a case where the projection display device 100 is in the standby state, that is, in a case where no power is supplied to the third display element 106B, the fan control unit 26 does not need to cool the third display element 106B and does not operate the fan 164. On the other hand, in a case where the projection display device 100 is activated and is in a normal operation state, that is, in a case where power is supplied to the third display element 106B, the fan control unit 26 performs control to operate the fan 164 when the temperature data input from the second temperature acquisition unit 24 becomes higher than the target temperature, for example. This can prevent the temperature of the third display element 106B from excessively increasing.

The timer control unit 27 controls a startup time at which to activate the projection display device 100. The timer control unit 27 can set a startup time (target startup time) TM2 (see FIG. 3) at which to activate the projection display device 100, for example, by user's operation. The startup time TM2 is an intended start time for the actual use of the projection display device 100. When the startup time TM2 is set, the timer control unit 27 sets a standby start time (standby time) TM1 a predetermined time before the startup time TM2. This predetermined time is, for example, a time sufficient to warm the third display element 106B to a temperature close to the target temperature at which the third display element 106B operates appropriately. As the predetermined time, a preset time may be used, but the predetermined time may be a time calculated based on the actual temperature of the third display element 106B, the target temperature, and the capacity of the heater 161.

In the present embodiment, the projection display device 100 enters the standby state under the control of the timer control unit 27 at a standby start time TM1. When the projection display device 100 enters the standby state, as illustrated in FIG. 3, power is supplied to the temperature sensor 162 and the heater 161 (FIG. 1) under the control of the first power supply control unit 21 (FIG. 2), and the operation of the heater 161 is controlled based on the temperature detected by the temperature sensor 162. Further, at the startup time TM2, the projection display device 100 is activated to enter the normal operation state under the control of the timer control unit 27. When the projection display device 100 enters the normal operation state, power is supplied to the band-gap type temperature sensor 163 instead of the temperature sensor 162 under the control of the second power supply control unit 22 (FIG. 2), and the operation of the heater 161 is controlled based on the temperature detected by the temperature sensor 163. As described above, the control unit 12 includes the timer control unit 27 capable of setting each of the startup time TM2 at which to activate the projection display device 100 and the standby start time TM1 at which to bring the projection display device 100 into the standby state a predetermined time before the startup time TM2, and thus, it is possible to display a stable image with reduced fringes, for example, at a time desired by the user.

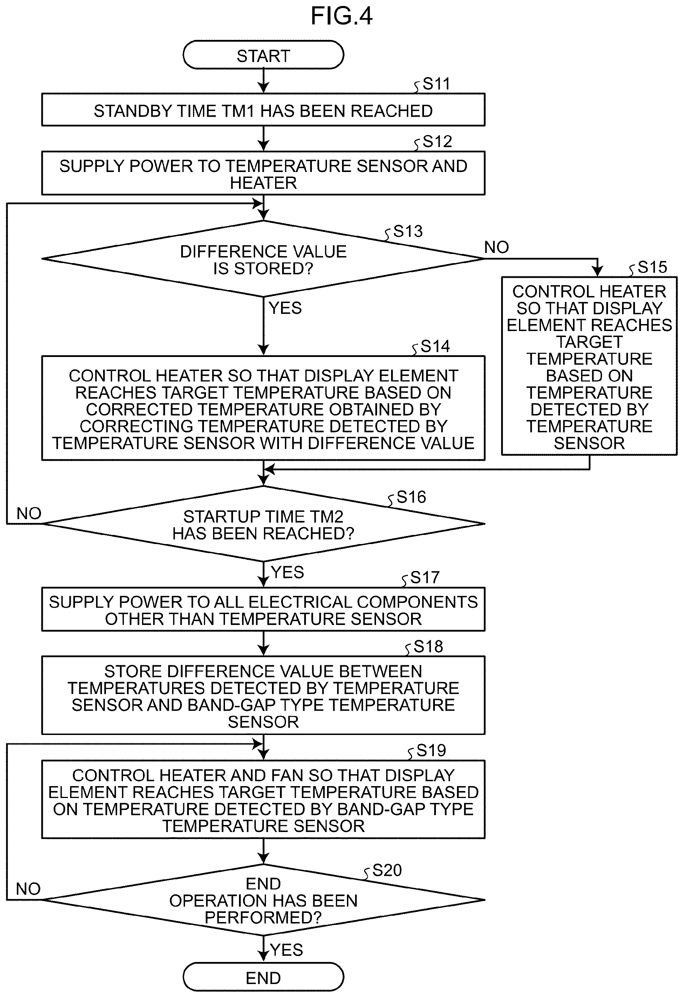

Next, a control operation on the heater by the control unit will be described. FIG. 4 is a flowchart illustrating steps of an operation of a control unit according to the present embodiment. As illustrated in FIG. 4, when the standby start time TM1 is reached (Step S11), the projection display device 100 enters the standby state, and the control unit 12 supplies power to the temperature sensor 162 and the heater 161 under the control of the first power supply control unit 21 (FIG. 2) (Step S12). This power supply starts the flow of electricity to the heater 161, and the third display element 106B is warmed up.

Next, the control unit 12 determines whether a difference value between detected temperatures is stored (Step S13). Specifically, the control unit 12 causes the heating control unit 25 to determine whether a difference value between the temperatures detected by the temperature sensor 162 and the band-gap type temperature sensor 163 is stored. In this determination, if the difference value between the detected temperatures is stored (Step S13; Yes), then the control unit 12 causes the heating control unit 25 to control the operation of the heater 161 so that the third display element 106B reaches the target temperature based on a corrected temperature obtained by correcting the temperature detected by the temperature sensor 162 with the difference value (Step S14). According to this configuration, for example, the third display element 106B can be accurately controlled to the target temperature in the second and subsequent standby states.

On the other hand, if the difference value between the detected temperatures is not stored (Step S13; No), then the control unit 12 causes the heating control unit 25 to control the operation of the heater 161 so that the third display element 106B reaches the target temperature based on the temperature detected by the temperature sensor 162 (Step S15). According to this configuration, for example, in the first standby state, the third display element 106B can be controlled to substantially the target temperature with the power consumption reduced although the accuracy is not higher than that of the band-gap type temperature sensor 163.

Next, the control unit 12 determines whether the startup time TM2 has been reached (Step S16).
Specifically, the control unit 12 causes the timer control unit 27 to determine whether the preset startup time TM2 has been reached. In this determination, if the startup time TM2 has not yet been reached (Step S16; No), then the control unit 12 returns the processing to Step S13, and repeatedly executes Steps S13 to S16. On the other hand, if the startup time TM2 has been reached (Step S16; Yes), then the control unit 12 activates the projection display device 100 to enter a normal operation state, and causes the second power supply control unit 22 to supply power to all the electrical components other than the temperature sensor 162 (Step S17). That is, the control unit 12 causes the second power supply control unit 22 to supply power to the light source 101 and the display element (first display element 106R, second display element 106G, and third display element 106B) of each color, whereby power is supplied to the band-gap type temperature sensor 163 provided in the third display element 106B instead of the temperature sensor 162.

Next, the control unit 12 calculates a difference value between the temperatures detected by the temperature sensor 162 and the band-gap type temperature sensor 163 to store the difference value (Step S18). When the projection display device 100 is activated, both the temperature sensor 162 and the band-gap type temperature sensor 163 are operated at substantially the same time. Accordingly, the control unit 12 causes the heating control unit 25 to calculate and store the difference value between the temperature sensor 162 and the band-gap type temperature sensor 163 based on each set of temperature data input from the first temperature acquisition unit 23 and the second temperature acquisition unit 24. The difference value stored is used when the detected temperature is corrected in the subsequent standby state (for example, Step S14).

The control unit 12 controls the operations of the heater 161 and the fan 164 based on the temperature detected by the band-gap type temperature sensor 163 so that the third display element 106B reaches the target temperature (Step S19). According to the configuration, the band-gap type temperature sensor 163 can directly and accurately measure the temperature of the third display element 106B, which enables the third display element 106B to be accurately controlled to reach the target temperature.

The control unit 12 determines whether an end operation has been performed (Step S20). Specifically, for example, it is determined whether the user has operated an operation stop button. In this determination, if no end operation has been performed (Step S20; No), then the control unit 12 returns the processing to Step S19, and repeatedly executes Steps S20 to S20. On the other hand, if an end operation has been performed (Step S20; Yes), then the control unit 12 ends the processing.

As described above, the projection display device 100 according to the present embodiment is the projection display device 100 including the third display element 106B embedded with the band-gap type temperature sensor 163, the heater 161 disposed on the third display element 106B via the heat sink 160, the temperature sensor 162 disposed on the heat sink 160, the fan 164 that air-cools the heat sink 160, and the control unit 12 that controls operations of the third display element 106B, the heater 161, and the fan 164 based on temperatures detected by the temperature sensors 162 and 163. In a case where the projection display device 100 is in a standby state, the control unit 12 operates the heater 161 to control the third display element 106B to have a target temperature based on the temperature detected by the temperature sensor 162 without supplying power to the third display element 106B. When the projection display device 100 is activated, the control unit supplies power to the third display element 106B and operates at least one of the heater 161 and the fan 164 to control the third display element 106B to have the target temperature based on the temperature detected by the temperature sensor 163. According to this configuration, the heater 161 is operated from the standby state of the projection display device 100 to control the third display element 106B to reach the target temperature, and when the projection display device 100 is activated, power is supplied to the third display element 106B, and based on the temperature detected by the temperature sensor 163, at least one of the heater 161 and the fan 164 is operated to control the third display element 106B to have the target temperature, so that stable image performance can be achieved immediately after the activation. Further, when the projection display device 100 is in the standby state, no power is supplied to the third display element 106B, which reduces the power consumption.

In the projection display device 100 according to the present embodiment, the control unit 12 acquires a difference value between the temperatures detected by the band-gap type temperature sensor 163 and the temperature sensor 162 at a timing when power is supplied to the third display element 106B, and at least in the subsequent standby state, the heater 161 is controlled based on a corrected temperature obtained by correcting the temperature detected by the temperature sensor 162 with the difference value. According to this configuration, the detection error of the temperature sensor 162 is corrected with the difference value, so that the third display element 106B in the standby state can be accurately controlled to have the target temperature.

In the projection display device 100 according to the present embodiment, the control unit 12 includes the timer control unit 27 capable of setting each of the startup time TM at which to activate the projection display device 100 and the standby start time TM1 at which to bring the projection display device 100 into the standby state a predetermined time before the startup time TM2. This configuration makes it possible to display, for example, a stable image with reduced fringes at a time desired by the user.

In the projection display device 100 according to the present embodiment, the first display element 106R, the second display element 106G, and the third display element 106B are disposed to correspond to red color, green color, and blue color respectively, and generates image light corresponding to each color, and the temperature sensor 162 and the heater 161 are disposed on the third display element 106B corresponding to at least blue color via the heat sink 160. According to this configuration, in particular, the temperature of the third display element 106B corresponding to blue color can be accurately controlled to the target temperature, which achieves stable image performance immediately after activation.

Although the present embodiment has been described above, the embodiment is not limited to the contents of the embodiment. In addition, the constituent elements include those that can be easily assumed by those skilled in the art, those that are substantially the same, and those in a so-called equivalent range. Further, the constituent elements can be appropriately combined. Further, various omissions, substitutions, or changes in the constituent elements can be made without departing from the gist of the embodiment described above. For example, in the present embodiment, the projection display device 100 is configured to be controlled to the standby state and the activated state by the operation of the timer control unit 27, but the present invention is not limited thereto. For example, before the user operates the operation start button to activate the projection display device 100, power may be supplied to the temperature sensor 162 and the heater 161 to bring the projection display device 100 into the standby state by operating the standby button in advance.

In the present embodiment, the target temperature in the standby state and the target temperature after activation are described as the same temperature, but these target temperatures may be different from each other. For example, the target temperature in the standby state (first target temperature) may be set lower than the target temperature after activation (second target temperature). When the projection display device 100 is activated, for example, excessive heat may be supplied to the display element (first display element 106R, second display element 106G, and third display element 106B) of each color by a heat source other than the heater 161, such as the light source 101. Accordingly, the target temperature in the standby state is preset to be lower than the target temperature after activation, which enables controlling the convergence time to reach the target temperature after activation to be shorter.

### Industrial Applicability

The projection display device of the present embodiment can be used for, for example, a projection display device using a reflective liquid crystal display element.

### Reference Signs List

10 DISPLAY MECHANISM
12 CONTROL UNIT
21 FIRST POWER SUPPLY CONTROL UNIT
22 SECOND POWER SUPPLY CONTROL UNIT
23 FIRST TEMPERATURE ACQUISITION UNIT
24 SECOND TEMPERATURE ACQUISITION UNIT
25 HEATING CONTROL UNIT
26 FAN CONTROL UNIT
27 TIMER CONTROL UNIT
100 PROJECTION DISPLAY DEVICE
101 LIGHT SOURCE
106R FIRST DISPLAY ELEMENT (LIQUID CRYSTAL DISPLAY ELEMENT CORRESPONDING TO RED COLOR)
106G SECOND DISPLAY ELEMENT (LIQUID CRYSTAL DISPLAY ELEMENT CORRESPONDING TO GREEN COLOR)
106B THIRD DISPLAY ELEMENT (LIQUID CRYSTAL DISPLAY ELEMENT CORRESPONDING TO BLUE COLOR)
160 HEAT SINK
161 HEATER (HEATING UNIT)
162 TEMPERATURE SENSOR (SECOND TEMPERATURE SENSOR)
163 TEMPERATURE SENSOR (FIRST TEMPERATURE SENSOR)
164 FAN (BLOWER FAN)
TM1 STANDBY START TIME
TM2 STARTUP TIME

## Claims

1. A projection display device comprising:
a liquid crystal display element embedded with a first temperature sensor;
a heating unit disposed on the liquid crystal display element via a heat sink;
a second temperature sensor disposed on the heat sink;
a blower fan that air-cools the heat sink; and
a control unit that controls operations of the liquid crystal display element, the heating unit, and the blower fan based on temperatures detected by the first temperature sensor and the second temperature sensor, wherein
in a case where the projection display device is in a standby state, the control unit operates the heating unit to control the liquid crystal display element to have a target temperature based on the temperature detected by the second temperature sensor without supplying power to the liquid crystal display element, and
when the projection display device is activated, the control unit supplies power to the liquid crystal display element and operates at least one of the heating unit and the blower fan to control the liquid crystal display element to have the target temperature based on the temperature detected by the first temperature sensor.

2. The projection display device according to claim 1, wherein
the control unit acquires a difference value between the temperatures detected by the first temperature sensor and the second temperature sensor at a timing when power is supplied to the liquid crystal display element, and
at least in a subsequent standby state, the heating unit is controlled based on a corrected temperature obtained by correcting the temperature detected by the second temperature sensor with the difference value.

3. The projection display device according to claim 1 or 2, wherein the control unit includes a timer control unit capable of setting a target startup time at which to activate the projection display device and a standby time at which to bring the projection display device into the standby state a predetermined time before the target startup time.

4. The projection display device according to claim 1 or 2, wherein
the liquid crystal display element is disposed to correspond to each of red color, green color, and blue color, and generates image light corresponding to each color, and
the second temperature sensor and the heating unit are disposed on the liquid crystal display element corresponding to at least blue color via the heat sink.
